# EUROPÄISCHE PATENTSCHRIFT

(11) **EP 0 466 095 B1**
(45) Veröffentlichungstag und Bekanntmachung des Hinweises auf die Patenterteilung: **28.10.1998**
(21) Anmeldenummer: 91111403.1
(22) Anmeldetag: 09.07.1991
(51) Int. Cl.: A01C 7/00, A01H 1/00

(54) **Begrünungsverfahren und Verfahren zur Herstellung des Saatgutes**
Method for covering with vegetation and method for the production of the seeds
Procédé pour couvrir avec de la végétation et méthode pour la production des semences

(30) Priorität: 12.07.1990 CH 2323/90
(43) Veröffentlichungstag der Anmeldung: 15.01.1992
(73) Patentinhaber: WERDER, Martin, CH-8048 Zürich (CH); ERIC SCHWEIZER SAMEN AG, CH-3602 Thun (CH)
(72) Erfinder: Werder, Martin, CH-8048 Zürich (CH)
(74) Vertreter: Spierenburg, Pieter

(56) Entgegenhaltungen:
- EP-A- 0 178 798
- DE-A- 2 044 777
- H.M.SCHIECHTL 'Sicherungsarbeiten im Landschaftsbau. Grundlagen, Lebende Baustoffe, Methoden' 1973, CALLEWEY, MüNCHEN
- Kapitel A, " Artenwahl für Grün- und Lebend-verbauung" Abschnitt 2, Nachökologischen Gesichtspunkten, Seiten 10-13, Abschnitt 3.1.2.2 Auswahl von Samenmischungen, Seiten 34-35, Abschnitt 8, Nach dem Ziel der Grünverbauung, Seite 80 Kapitel E, "Methoden des Grünflächen und Landschaftsbaues" Abschnitt 1.1.4.3 Rasensaten, Seiten 149-166.
- H.KUCKUCK, G.KOBABE & G.WENZEL 'Grundzüge der Pflanzenzüchtung' 1985, WALTER DE GRUYTER, BERLIN Paragraph 1.1 Auslesezüchtung Seiten 4-6
- NN 'Barenbrug Grassen voor recreatie' 1991, BARENBRUG BV, OOSTERHOUT

## Beschreibung

Die Erfindung betrifft ein Verfahren zur Herstellung von Handelssaatgut für die Begrünung von Flächen, Böschungen, Hängen und/oder Bauwerken im Erd- und Wasserbau, bei Staukraftanlagen, Seilbahnen und Skisportanlagen nach dem Oberbegriff des Patentanspruchs 1 und ein Begrünungsverfahren mit einem derart hergestellten Handelssaatgut nach dem Oberbegriff des Patentanspruchs 7.

Innerhalb des Grünverbaus nimmt die Rasensaat als Deckbauweise heute die wichtigste Stellung ein, da sie dank der Entwicklung mechanisierter Arbeitsverfahren die rationellste und billigste Methode zu oberflächlichen Festlegung unbewachsener, erosionsgefährdeter Standorte darstellt.

Eine Rasensaat als ingenieurbiologische Verbauung steht meist im Zusammenhang mit Bauarbeiten, z.B. Schwelleneinbau für Wildbachverbauungen und Erdarbeiten, die bezwecken, zu steile Böschungen zu eliminieren. Dort wo steile Böschungen infolge von Bauwerken (z.B. Strassen) unabdingbar sind, werden diese steilen Böschungen durch baulichen Massnahmen gestützt. Die Rasensaat bildet in allen diesen Fällen den endgültigen oder zumindest vorübergehenden Abschluss der Sanierungsarbeiten. Die Rasensaat ist unter den verschiedenen ingenieurbiologischen Bauweisen das kostengünstigste Verfahren zur Verfestigung der Oberfläche von geneigten Böden. Die Rasensaat wird auch auf grossen zu begrünenden Flächen eingesetzt, ohne dass gleichzeitig Bauarbeiten oder Bauwerke in diesen zu begrünenden Flächen ausgeführt werden. Es ist aber eher die Regel, dass gleichzeitig mit oder vorgängig von ingenieurbiologischen Verbauungsarbeiten zumindest die Zufahrtsstrassen und Erschliessungswege zur Begrünungsbaustelle erstellt werden.

Für die Praxis stehen heute verschiedene ausgereifte Verfahren zur Verfügung. Die wichtigsten davon sind in dem Buch von H.M.Schiechtl "Sicherungsarbeiten im Landschaftsbau. Grundlagen, lebende Baustoffe, Methoden." (Verlag Callewey, München, 1973) eingehend beschrieben. Bedeutung erlangt haben vor allem die Naßsaatverfahren, bei welchen das Saatgut zusammen mit Bodenverbesserungsstoffen, Düngemitteln, Kleber und Mulchstoffen mit Wasser auf die zu begrünenden Flächen aufgespritzt wird (z.B. Hydrosaat). Ein weiteres gebräuchliches Verfahren ist die Strohdecksaat nach H.M. Schiechtl ( das sogenannte "Schiechteln" - eingetragenes Markenzeichen), das häufig an den schwer zugänglichen Begrünungsbaustellen zum Einsatz kommt, weil es sich gut für die manuelle Erstellung der Begrünungsanlagen eignet. Aus dieser Arbeit ist es bekannt, einige ausgewählte Sorten von Gramineen, unter anderem der Pflanzenart Festuca rubra, zu verwenden für die Grünverbauung im Strassenbau. Unter speziellen klimatischen und edaphischen Bedingungen in Schweden hat man mit einer solchen Mischung von vier bestimmten Sorten gewisse Erfolge erreichen können.

Aus AT-B-320 529 ist eine Grünverbauung von Hängflächen bekannt, wobei eine mechanische Halterung aus einem räumlichen Skelettkörper aus Metalldrähten angebracht wird, um die Böschung mechanisch zu stützen und dadurch eingepflanzte Bäume oder Sträucher vor dem Zugeschüttetwerden zu bewahren. Diese mechanische Verbauung eignet sich aus Kostengründen nur für sehr beschränkte Flächen.

Ein Verfahren und Saatgut zur Begrünung ist unter der Handelsmarke LONZAGREEN aus dem gleichnamigen Prospekt vom 12. April 1989 bekannt. Die Samenmischung setzt sich aus Samen mehrerer Pflanzenfamilien und Pflanzenarten zusammen.

Ferner werden beim erwähnten Verfahren Saatdünger für die unmittelbare Nährstoffversorgung, Unterhaltsdünger, welche während etwa vier Jahren abgebaut werden, und Saatbinder, ein organischer, pulverförmiger und leicht anwendbarer Klebstoff, dem Saatgut beigefügt. Die in der Samenmischung verwendeten Gras- und Kräuterarten stammen fast ausnahmslos von Handelssorten, die speziell für die Verwendung in der intensiven Landwirtschaft zur Futterproduktion und für Sportrasen gezüchtet wurden. Unter den extremen Klimabedingungen, wie sie in alpinen Gegenden vorherrschen, wie beispielsweise grosse Temperaturunterschiede, starke Lichteinstrahlung, saure und nährstoffarme Böden, Nachtfröste und eine besonders kurze Vegetationsperiode wegen der langen Schneebedeckung, haben sich diese Samenmischungen aus den üblichen Handelssorten nicht bewährt. Deshalb müssen relativ viele Hilfsstoffe beigemischt werden, um ein einigermassen akzeptables Resultat zu erhalten. So werden beispielsweise bei Verfahren nach "Lonzagreen" auf eine Saatgutmenge von 60 bis 100 kg pro Hektare bis zu 12000 kg Hilfsstoffe zugefügt. Diese Hilfsstoffe müssen an die schwer zugänglichen Begrünungsstandorte transportiert und auf die Flächen verteilt werden. Solche Transporte können in den alpinen Gebieten fast nur mit Helikoptern ausgeführt werden, wodurch beträchtliche zusätzliche Kosten entstehen.

Ausserdem besteht der mengenmässig grösste Anteil der Hilfsstoffe aus granuliertem, getrocknetem Klärschlamm aus der kommunalen Abwasserbehandlung. Diese Klärschlämme enthalten giftige Schwermetalle wie Cadmium, Blei und Quecksilber in nicht unbedenklichen Mengen.
Aus der Sicht des Quellen-, Gewässer- und Grundwasserschutzes sind jedoch derartige Hilfsstoffe unerwünscht. Die alpinen Gewässer Mitteleuropas stellen bekanntlich das wichtigste Trinkwasserreservoir Europas dar, und diese Bedeutung für die Trinkwasserversorgung wird in Zukunft noch erheblich zunehmen. Aus der Sicht des Grundwasserschutzes ist daher geradezu zu verhindern, erosionsgefährdete Hangflächen mit schwermetallhaltigen Düngern im grossen Stil zu behandeln.

Um diese erwähnten Nachteile (hoher Aufwand an Hilfsstoffen; geringe Vitalität der verwendeten Handelspflanzen) zu beseitigen, ist deshalb vorgeschlagen worden, von alpinen Pflanzen Saatgut herzustellen und diese Samen in den Samenmischungen zu verwenden.

Alpenpflanzen zeigen grosse Unterschiede im Keimverhalten und in der Jungpflanzenentwicklung. Viele Arten (z.B. aus der Familie der Leguminosen) besitzen Mechanismen, die eine schnelle Keimung verhindern, auch wenn die Wachstumsbedingungen günstig sind. Keimhemmungsmechanismen sind z.B. harte, wasserundurchlässige Samenschalen / Samenhüllen.

Von Saatgut, das als Produkt gehandelt wird, ist aber gefordert, dass die Keimfähigkeit als wichtigstes objektives Qualitätsmerkmal jederzeit im Labor oder im Feldversuch überprüft werden kann, sowohl vom Verkäufer des Saatgutes als auch vom Käufer. Es sind zwar mechanische, chemische und andere Verfahren bekannt, um die Keimhemmung von Samen zu brechen, jedoche sind diese Verfahren kompliziert und die Keimhemmung ist auch nicht in jedem Jahr gleich ausgebildet, so dass diese Qualitätsprüfung des Saatgutes auf ausserordentliche, praktische Schwierigkeiten stösst.

Andere alpine Pflanzenarten, welche keine Keimhemmung besitzen, eignen sich aufgrund ihrer agronomischen Eigenschaften nicht für die Vermehrung und Produktion von Saatgut, z.B. durch eine zu niedrige Wuchshöhe, welche eine maschinelle Saatguternte erschwert oder verunmöglicht, oder durch geringe Samenerträge bezogen auf die Anbaufläche.

Um die oben erwähnten Nachteile zu beseitigen, ist daher eine gemischte Technik von Ansaat und manuellen Anpflanzungen entwickelt worden (vergl. Neue Zürcher Zeitung Nr. 290, S. 65 vom 13.12.1989). Dieses Verfahren ist jedoch hauptsächlich auf das Anpflanzen bereits herangewachsenen Pflanzen ausgerichtet, welche durch die sogenannte "Einzelrametklonierung" aufgezogen werden. Es werden dazu aus einer beschränkten Anzahl lebender Pflanzen, welche aus alpinen Gebieten oder aus Versuchsgärten entnommen worden sind, durch wiederholte Klonierung beliebig viele Tochterpflanzen aufgezogen. Die durch die Klonierung entstehenden einzelnen Ramets wachsen in mit Kammern versehenen Kunststoffbehältern heran. Zunächst werden sie während etwa sechs Wochen im Gewachshaus in den unteren Regionen (Zürich) gezüchtet. Danach werden die Pflanzen zur Akklimatisation in die subalpine Stufe (etwa 1600 m. ü. M.) und nach weiteren zwei Wochen in die alpine Stufe an die vorgesehenen Be grünungsorte (etwa 2400 bis 2500 m. ü. M.) gebracht und angepflanzt. Diese Art der Bepflanzungen sind sehr arbeitsintensiv und deshalb teuer. Sie haben jedoch den Vorteil, dass durch die Anpflanzung eine sofortige Begrünung in der erwünschten natürlichen Artenvielfalt entsteht. Die Pflanzen bilden sodann ziemlich bald Samen, welche helfen, die Population weiter zu stabilisieren.

Nachteilig ist es, dass das obenerwähnte Anpflanzverfahren nur auf kleinen Flächen und an einigermassen zugänglichen Stellen angewandt werden kann. Eine Mechanisierung des Verfahrens kommt kaum in Frage, so dass eine Kostenreduktion fast ausgeschlossen ist, und somit dieses Verfahren nur unter speziellen Bedingungen und auf kleinen Flächen Anwendung finden kann.

Die Erfindung stellt sich deshalb die Aufgabe, ein Herstellungsverfahren für Handelssaatgut sowie ein Verfahren zur Begrünung von Flächen, Böschungen, Hängen und/oder Bauwerken im Erd- und Wasserbau, bei Staukraftanlagen, Seilbahnen und Skisportanlagen mit einem derart hergestellten Handelssaatgut anzugeben, bei welchen die Nachteile der obengenannten Verfahren nicht mehr auftreten, das Begrünungsverfahren gleichzeitig kostengünstig auf grossen Flächen eingesetzt werden kann und die Erfordernisse des Landschafts- und Gewässerschutzes erfüllt werden.

Diese Aufgabe wird durch ein Herstellungsverfahren mit den Merkmalen des Patentanspruchs 1 und durch ein Begrünungsverfahren mit den Merkmalen des Patentanspruchs 7 gelöst.

Die Erfindung beruht auf der wesentlichen Erkenntnis,
dass für eine dauerhafte und erfolgreiche Begrünung in den subalpinen und alpinen Höhenlagen das Saatgut in seinen genetischen Eigenschaften für den Verwendungszweck in diesen Lagen angepasst sein muss;
dass die in der Begrünung wachsenden Pflanzenarten aus Populationen mit einer natürlichen Streuung der genetischen Eigenschaften bestehen müssen;
und dass die für die Vermehrung des Saatgutes verwendeten, aus den Samen wildwachsender Pflanzen nachgezogenen Keimlinge während den wichtigen Phasen ihrer Jungpflanzenentwicklung unter möglichst ähnlichen Bedingungen wachsen wie die wilden Pflanzen, von denen das erste Saatgut für die Vermehrung stammt.

Erst durch diese Eigenschaften des Begrünungsverfahrens und des Herstellungsverfahrens für das Saatgut besteht Gewähr, dass die Aussaat eine dauerhafte Begrünung bewirken kann, die standortgerecht ist, d.h. die sich nach wenigen Jahren so präsentiert, wie wenn sie natürlich entstanden wäre.

Ein Vorteil des erfindungsgemäss hergestellten Saatgutes ist es, dass eine standortgerechte Begrünung stattfinden kann mit Pflanzen, die an diesen Orten normalerweise häufig vorkommen, und dass aus den für die Begrünung verwendeten Samen Pflanzen wachsen, deren genetische Eigenschaften und deren genetische Variabilität sehr ähnlich sind wie diejenigen natürlich gewachsener, "wilder" Pflanzenbestände.

Die Begrünung nach dem Verfahren von Anspruch 7 ist ausdauernd, frosthart und an lange Schneebedeckung und kurze Vegetationsperioden angepasst.

Begrünungen, die nach der Lehre des Anspruchs 7 angelegt werden, benötigen wegen der grösseren Robustheit des verwendeten Pflanzenmaterials weniger Startdünger sowie weniger Pflege und Unterhaltsdünger in den folgenden Jahren. Dadurch ist der Transportaufwand zur Ausführung und zum Unterhalt der Begrünung geringer. Da wegen der höheren Vitalität des Pflanzenmaterials weiniger Dünger verwendet werden können, wird den Erfordernissen des Gewässerschutzes bestmöglichst entsprochen.

Das Saatgut von Festuca rubra eignet sich besonders für die Verwendung in alpinen Begrünungen. Festuca rubra ist in den natürlichen Weidenbeständen dieser Höhenlägen oberhalb der Waldgrenze häufig vertreten. Dashalb kann Saatgut von Festuca rubra einen bedeutenden Anteil der verwendeten Samenmischung ausmachen.
Pflanzen aus Samen von Festuca rubra, die gemäss dem Herstellungsverfahren nach einem der Ansprüche 1 bis 6 hergestellt werden, liefern auch in grossen Höhelagen bis 2600 m.ü.M. Samen, so dass eine einmal angelegte Begrünungsanlage sich durch am Ort neu gebildete Samen weiterentwickeln und festigen kann. In der Vermehrung liefern Ökotypen von Festuca rubra befriedigende Erträge, und die Samenernte kann mit bekannten Verfahren durchgeführt werden.

Weitere Vorteile der Erfindung folgen aus der nachstehenden Beschreibung. Dort wird die Erfindung anhand von in den Zeichnungen dargestellten Beispielen näher erläutert. Es zeigt:

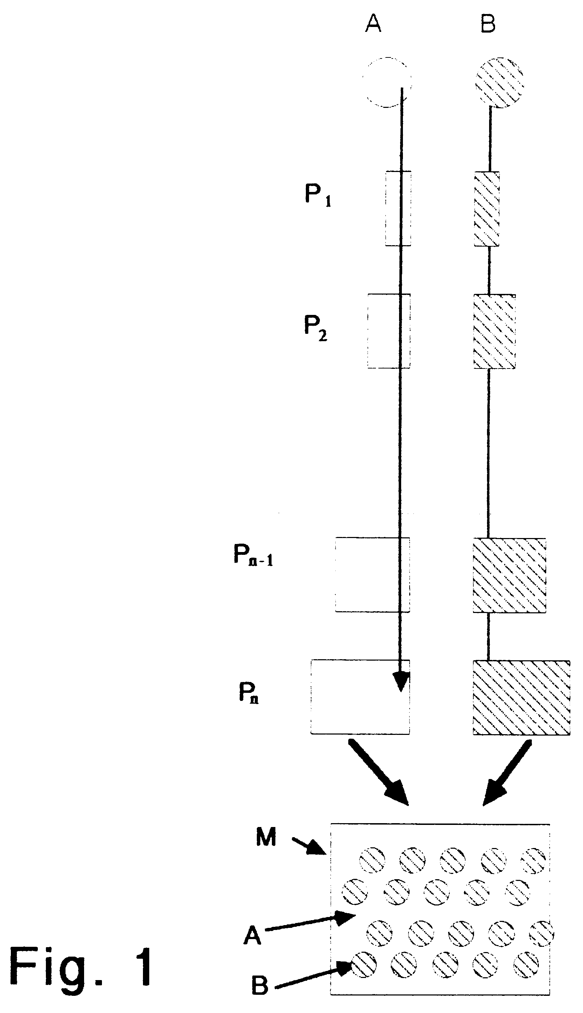

- Fig. 1: ein erstes Herstellungsverfahren von Saatgut zur Begrünung,
- Fig. 2: ein zweites Herstellungsverfahren, und
- Fig. 3: ein drittes Herstellungsverfahren.

Um die neuartigen Eigenschaften des Saatguts und des zugehörigen Herstellungsverfahren besser zu verstehen, sind in den folgenden Abschnitten einige Angaben zur Definition eines Ökotypen und zum Unterschied gegenüber einer Sorte nach Sortenschutzgesetz notwendig:

### Definition eines Ökotypen (Wildform)

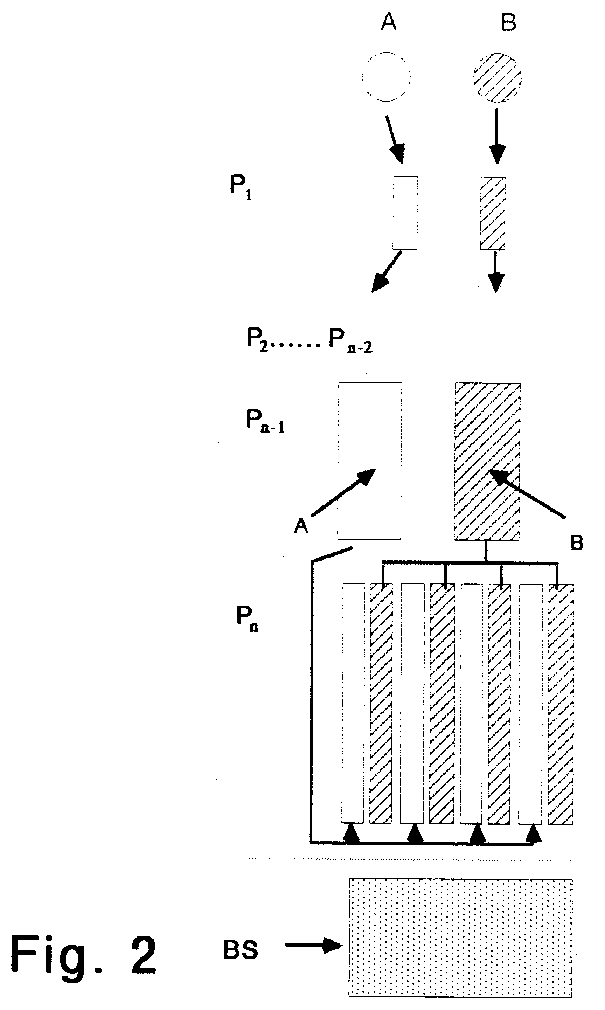

Unter dem Ökotypen einer Pflanzenart versteht man die an einem bestimmten geografischen Lokus wildwachsenden Individuen einer Pflanzenart. Diese bilden zusammen die sogenannte Ökotypenpopulation, welche sich aufgrund der typischen Standortbedingungen des Lokus, wie Klima, Boden und die Konkurrenz mit anderen Arten, im Lauf der Zeit herangebildet hat. Deshalb kann angenommen werden, dass dieser Ökotyp optimal für den jeweiligen Standort angepasst ist - wie es eben "natürlich" ist. In diesem Sinne wird der Begriff "standortgerecht"verwendet. Eine Ökotypenpopulation zeichnet sich aus durch eine grössere Variabilität in den genetischen, physiologischen und phänotypischen Merkmalen und Eigenschaften aus, als dies bei einer gezüchteten Pflanzenart der Fall ist. Jedoch ist es genau diese Eigenschaft der grösseren genetischen Variabilität, die eine erfolgreiche und dauerhafte Vegeation in den klimatischen Grenzlagen kennzeichnet. Für diese Begrünungen werden üblicherweise hohe Samenmengen pro Flächeneinheit verwendet - in der Regel 6 bis 10 Gramm pro m² ; in schwierigeren Fällen bis zu 20 Gramm pro m². In einem stabilisierten Bestand mit geschlossener Pflanzendecke überleben vielleicht einige Dutzend oder einige hundert Pflanzen, d.h. unter den angesäten der ungefähr 10'000 verschiedenen Keimlinge findet eine natürliche Selektion statt. Von der Ökotypenpopulation überleben deshalb diejenigen Pflanzen, welche sich optimaler am neuen Standort anpassen können, und diese natürliche Auslese bewegt sich im Verhältnis von 1:20 bis 1:200. Es ist schon aus diesem Grund äusserst unerwünscht, aus einer Wildform eine ausgesprochene Pflanzensorte zu züchten, die dann kaum mehr diese Anpassungsfähigkeit aufweisen kann, da durch die Zucht eine starke Einengung der vorhandenen genetischen Vielfalt erfolgt. Für die Wiederbegrünung an alpinen, höher gelegenen Standorten soll, im Gegensatz zum landwirtschaftlichen Pflanzenbau, wo gerade die ausgesprochenen Sorteneigenschaften gefragt sind, die Selektion der jeweils geeignetsten Pflanzenindividuen durch natürliche Auslese am Begrünungsstandort stattfinden. Um die Variabilität und damit auch die Anpassungsfähigkeit zu erhöhen, ist besonders von Vorteil, Ökotypen mehrerer Loki einer Pflanzenart zu verwenden, d.h. von zwei oder mehr Standorten, aus unterschiedlichen, aber etwa gleich hoch gelegenen Regionen des Alpenraumes, oder auch von unterschiedlichen geologischen Standorten und/oder von unterschiedlichen Höhenlagen. Bei diesem Verfahren werden die Ökotypen von den Herkünften A und B gesammelt, und es erfolgt eine getrennte Vermehrung während der ganzen Saatgutproduktion P₁, P₂,...Pₙ₋₁, Pₙ, wobei n eine ganze Zahl ist, die die Anzahl Vermehrungszyklen P angibt. Erst nach den einzelnen Vermehrungszyklen werden die Samen der Herkünfte A und B gemischt, so dass das Begrünungssaatgut aus einem Gemenge M von Samen der Ökotypenherkünfte A und B besteht. Eine Vermehrungszyklus P₁,..., Pₙ kann dabei auch mehr als ein Jahr dauern, da viele wilde Pflanzen im ersten oder zweiten Jahr nach der Aussaat wenig oder gar keine Samen bilden. Je nach Pflanzenart und der zu produzierenden Menge an Ökotypensaatgut sind mehrere Vermehrungszyklen für die Saatgutproduktion notwendig, jedoch immer mindestens ein Vermehrungszyklus.
Eine andere Variante für das Herstellungsverfahren ist in Fig. 2 illustriert. Dabei werden mindestens zwei Ökotypenherkunfte A und B solange getrennt vermehrt, bis für den letzten Vermehrungszyklus Pₙ genügend Saatgut vorhanden ist. In der letzten Produktionsstufe des Saatgutes Pₙ werden die Ökotypenherkunfte gemeinsam auf demselben Feld angebaut, z. B. indem die Samen A und B zu einem Gemenge gemischt werden und dann ausgesät werden, oder indem wechselweise eine oder mehrere Reihen von A und anschliessend eine oder mehrere Reihen von B angesät werden, undsoweiter.

Das Begrünungssaatgut BS enthält dann Bastarde von den Ökotypen A und B.

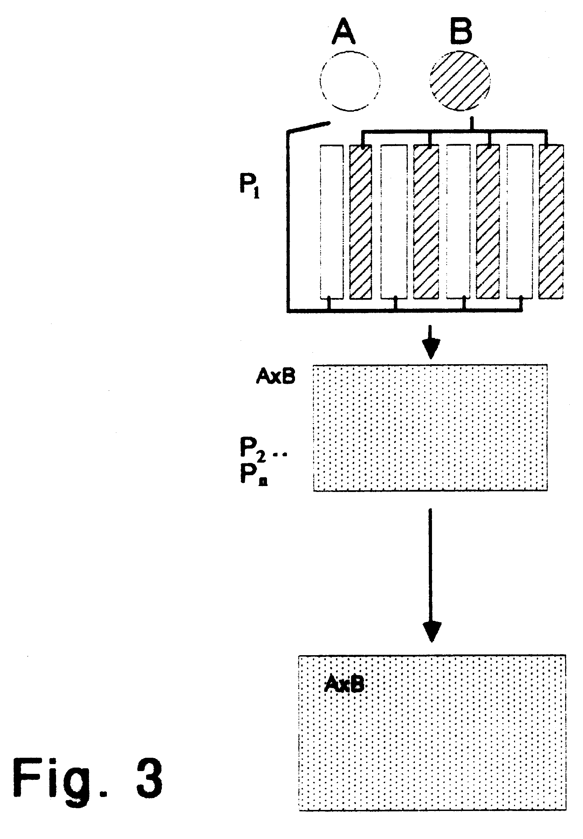

Es ist aber auch möglich, die Ökotypenherkünfte A und B nach dem Sammeln des Wildsaatgutes von Anfang an gemischt weiterzuvermehren, so dass diese Bastardierung im ersten Vermehrungszyklus P₁ auftritt, wie dies in Fig. 3 gezeigt ist. In den folgenden Vermehrungszyklen P₂ bis Pₙ findet dann wieder eine beschränkte Homogenisierung der Bastardpopulation statt, wie sie beispielsweise vom agronomischen Standpunkt der Saatgutproduktion erwünscht sein kann, wobei die Genom- und Genvielfalt der ursprünglichen Ökotypen jedoch weitgehend erhalten bleiben. Die Vermehrung des Ökotypensaatguts erfolgt unter möglichst natürlichen Bedingungen, d.h. es wird auf einen züchterischen Einfluss des Menschen bewusst verzichtet. Wie nachstehend ausführlicher beschrieben, erfolgen die Produktion des Basissaatguts und die Saatgutvermehrung in tiefer gelegenen Lagen, so dass die Einflüsse des Vermehrungsstandortes so gering wie möglich gehalten werden müssen, damit während der Vermehrung keine Verschiebung in den wichtigen Populationseigenschaften auftreten kann. Das Vermehrungsverfahren ist nun in folgenden Stufen unterteilt:

### I. Sammeln des Wildsaatguts

Es werden grössere Wildsaatgutmengen mehrerer Loki gesammelt, d.h. pro Lokus etwa 500 Gramm bis 1 kg, und zwar auf Meereshöhen von 1800 bis 2400 m.ü.M. und - wie gesagt - in mehreren verschiedenen Regionen im ganzen Alpenraum. Dadurch soll erreicht werden, dass einerseits die Population eines bestimmten Standortes in ihrer grösstmöglichen Variabilität erfasst wird und anderseits die Ökotypen einer ganzen Region oder eines geographischen Raumes erfasst werden können.

### II. Vermehrung der Wildsamen

Ein Teil der Wildsamen wird in Vermehrungsparzellen angesät, und ein anderer Teil wird in Saatschalen kultiviert, und zwar in der Zeit von September bis April in einem Treibhaus aus z.B. Plastik auf etwa 1000 m.ü.M., wobei die wichtigen Phasen der Keimzeit in den Monaten Dezember bis Februar gelegt werden. Während dieser Zeit herrschen nämlich im Gewächshaus durch intensive Nachtfröste und niedrigen Tagestemperaturen in etwa ähnliche Temperaturverläufe wie nach der Schneeschmelze und vor dem Wintereinbruch an einem Standort auf 2000 bis 2600 m.ü.M. Durch diese Massnahmen werden die alpinen Temperaturbedingungen in einem bestimmten Zeitraum künstlich nachgebildet. Damit ist garantiert, dass die Population nicht durch bessere Wachstumsmöglichkeiten am Vermehrungsort in ihrer wichtigsten Standorteigenschaften degeneriert. Das Gewächshaus selber ist ein tunnelartiges Gebilde aus Plastik, wie es im Gemüseanbau verwendet wird. Um grössere Tag-Nacht-Unterschiede zu erreichen, kann es tagsüber geheizt und/oder nachtsüber tiefgekühlt werden. Es sollen vorzugsweise eine Tagestemperatur von etwa 15° C und eine Nachttemperatur von etwa -10° C herrschen, um die obigen Bedingungen erfüllen zu können. Das Gewächshaus kann auch mit künstlicher Beleuchtung versehen sein, damit die Photoperiode der Sommermonate simuliert werden kann. Die derart herangezogenen Pflanzen werden dann in spezielle Behälter umgepflanzt und im Frühling - sprich etwa März - im Freiland in die Basisvermehrungsparzellen gesetzt. Somit findet eine Auswahl unter den Pflanzen nicht statt, abgesehen von der natürlichen Selektion durch die grossen Temperaturwechsel. Da die Vermehrung im Winter erfolgt und auf der Meereshöhe des Vermehrungsortes die Niederschläge meistens in Form von Schnee erfolgen, können die alpinen Sommerschneefälle im Gewächshaus ausgezeichnet nachgeahmt werden, indem Schnee vom Freien ins Gewächshaus befördert und auf die in den Saatkisten befindlichen Jungpflanzen ausgebracht wird. Die Saatkisten mit den Keimlingen und/oder Jungpflanzen können aber auch für kürzere oder längere Zeit, z. B. einige Tage lang, ins Freie in den Schnee gestellt werden.

Die Nachzucht aus Wildmaterial kann in regelmässigen Zeitabständen durchgeführt werden, um die Wildform eines Ökotyps in ihrer natürlichen Form zu erhalten, beispielsweise etwa alle 3 bis 5 Jahre.

### III. Die eigentliche Aussaat des hergestellten Saatguts

Auf die oben beschriebene Art wird nun eine Samenmischung aus Ökotypensaatgut der Grasart Festuca rubra, ferner der Grasarten Poa alpina und/oder Phleum alpinum und/oder Agrostis Schraderiana hergestellt. Die Kräuter- und Leguminosensamen können sowohl aus Wildpflanzen als auch aus üblichen Handelssorten bestehen.
Das Saatgut kann auch Grassamen von Handelssorten anderer Grasarten als Festuca rubra enthalten, da es nicht immer möglich ist, von jeder Pflanzenart Ökotypensaatgut in genügender Menge zu produzieren.
Die eigentliche Aussaat erfolgt nach den an und für sich bekannten Verfahren für die Begrünung, es können jedoch geringere Mengen an Dünger wie sonst üblich aufgewendet werden. Auch kann es manchmal vorteilhaft sein, die Saatgutmenge pro Fläche etwas zu reduzieren, weil wegen der grösseren Vitalität der Ökotypenpflanzen sonst zu dichte Pflanzenbestände entstehen.

## Patentansprüche

1. Verfahren zur Herstellung von Handelssaatgut für die Begrünung von Flächen, Böschungen, Hängen und/oder Bauwerken im Erd- und Wasserbau, bei Staukraftanlagen, Seilbahnen und Skisportanlagen, dadurch gekennzeichnet, dass in alpinen und subalpinen Höhenlagen, die eine ungefähr gleiche Höhe über Meer aufweisen wie die zu begrünenden Flächen, Samen von wildwachsenden Pflanzen einer natürlichen Ökotypenpopulation der Pfanzenart Festuca rubra gesammelt werden, wobei das Sammeln so erfolgt, dass die Samen ein repräsentatives Muster der am Sammelort wachsenden Population einer Wildpflanzenart darstellen, danach die Wildsamen in tieferen Lagen als dem Herkunftsort unter weitgehend getreu simulierten Klimabedingungen, wie sie am Herkunftsstandort der Wildpflanzen herrschen, zum Keimen gebracht werden, sodann diese Keimlinge in grössere Behältnisse verpflanzt und danach auf Vermehrungsparzellen in gut zugänglichen Gebieten, die unterhalb der alpinen und subalpinen Herkunftsstandorte der Wildsamen gelegen sind, angepflanzt und zum Samen gebracht werden.

2. Verfahren zur Herstellung von Handelssaatgut für die Begrünung von Flächen, Böschungen, Hängen und/oder Bauwerken im Erd- und Wasserbau, bei Staukraftanlagen, Seilbahnen und Skisportanlagen, dadurch gekennzeichnet, dass in alpinen und subalpinen Höhenlagen, die eine andere Höhe über Meer aufweisen wie die zu begrünenden Flächen, Samen von wildwachsenden Pflanzen einer natürlichen Ökotypenpopulation der Pfanzenart Festuca rubra gesammelt werden, wobei das Sammeln so erfolgt, dass die Samen ein repräsentatives Muster der am Sammelort wachsenden Population einer Wildpflanzenart darstellen, danach die Wildsamen in tieferen Lagen als am Herkunftsstandort unter weitgehend getreu simulierten Klimabedingungen, wie sie am Herkunftsstandort der Wildpflanzen herrschen, zum Keimen gebracht werden, sodann diese Keimlinge in grössere Behältnisse verpflanzt und danach auf Vermehrungsparzellen in gut zugänglichen Gebieten, die unterhalb der alpinen und subalpinen Herkunftsstandorte der Wildsamen gelegen sind, angepflanzt und zum Samen gebracht werden.

3. Verfahren nach Anspruch 1 oder 2, dadurch gekennzeichnet, dass die Samen der wildwachsenden Pflanzen von mindestens zwei Herkunftsstandorten auf getrennten Vermehrungsfeldern während mindestens eines Vermehrungszyklus angebaut werden, danach die derart gebildeten Samen der verschiedenen Herkunftsstandorte gemischt auf dem selben Vermehrungsfeld angebaut werden und die auf diesem gemischten Vermehrungsfeld hergestellten Samen als Begrünungssaatgut verwendet werden.

4. Verfahren nach Anspruch 1 oder 2, dadurch gekennzeichnet, dass die Samen der wildwachsenden Pflanzen von mindestens zwei Herkunftsstandorten während mindestens zwei Saatgutvermehrungszyklen gemischt auf demselben Vermehrungsfeld angebaut werden und die derart durch Bastardierung zwischen den verschiedenen Ökotypenpopulationen gebildeten Samen als Begrünungssaatgut verwendet werden.

5. Verfahren nach einem der Ansprüche 1 bis 4, dadurch gekennzeichnet, dass die wichtigsten Phasen der Keimung in den Monaten September bis April, vorzugsweise von Dezember bis Februar, gelegt werden.

6. Verfahren nach Anspruch 5, dadurch gekennzeichnet, dass die Wildsamen in einem Treibhaus zur Keimung ausgesät werden, wobei die klimatischen Gegebenheiten und die grossen Temperaturunterschiede und/oder weitere das Pflanzenwachstum beeinflussende Standortfaktoren des Herkunftsstandortes der Wildpflanzen mit mechanischen und/oder klimatechnischen und/oder lichttechnischen Hilfsmitteln nachgebildet werden.

7. Verfahren zur Begrünung von Flächen, Böschungen, Hängen und/oder Bauwerken im Erd- und Wasserbau, bei Staukraftanlagen, Seilbahnen und Skisportanlagen mit einem Handelssaatgut hergestellt mit einem Verfahren nach einem der Ansprüche 1 bis 6, wobei das Handelssaatgut mit Hilfsstoffen wie Düngern, bodenverbessernden Materialien und Haftmitteln mit mechanischen und/oder pneumatischen und/oder hydraulischen Verfahren auf die zu begrünenden Flächen aufgebracht wird.

## Claims

1. Method for the production of commercial seeds for the covering with vegetation of surfaces, embankments, slopes and/or construction works involving earthwork or water engineering, water-power plants, cable-car installations and ski sporting facilities, characterized in that seeds of wild-growing plants of a naturally-occurring ecotype population of the plant species Festuca rubra are collected at alpine and subalpine altitudes in areas at approximately the same height above sea-level as the areas to be covered with vegetation and in such a manner that the seeds constitute a representative sample of the population of a wild plant species growing in the collection area, after which the wild seeds are germinated under stimulated climatic conditions substantially equivalent to those which prevail at the source area but at locations which are at a lower level than the source area and the seedlings are first transplanted into larger containers and then replanted and brought to the seeding condition in propagation lots in easily-accessible areas which lie below the original alpine and sub-alpine source areas of the wild seeds.

2. Method for the production of commercial seeds for the covering with vegetation of surfaces, embankments, slopes and/or construction works involving earthwork or water engineering, water-power plants, cable-car installations and ski sporting facilities, characterized in that seeds of wild-growing plants of a naturally-occurring ecotype population of the plant species Festuca rubra are collected at alpine and subalpine altitudes in areas at a different height above sea-level compared with the areas to be covered with vegetation and in such a manner that the seeds constitute a representative sample of the population of a wild plant species growing in the collection area, after which the wild seeds are germinated under stimulated climatic conditions substantially equivalent to those which prevail at the source area but at locations which are at a lower level than the source area and the seedlings are first transplanted into larger containers and then replanted and brought to the seeding condition in propagation lots in easily-accessible areas which lie below the original alpine and sub-alpine source areas of the wild seeds.

3. Method according to claims 1 or 2 characterized in that the seeds of the wild-growing plants from at least two original source areas are cultivated in separate propagation fields for at least one propagation cycle after which the seeds from the different original source areas obtained in this way are mixed and cultivated in the same propagation field with the seeds produced from this mixed propagation field being used for purposes of covering with vegetation.

4. Method according to claims 1 or 2, characterized in that the seeds of the wild-growing plants from at least two original source areas are cultivated in separate propagation fields for at least two propagation cycles, after which the seeds from the different original source areas obtained in this way are mixed and cultivated in the same propagation field, with the hybridised seeds produced from the different ecotype population being used for purposes of covering with vegatation.

5. Method according to claims one of the claims 1 to 4, characterized in the most important phases of the germination are carried out in the months of September to April, preferably in the months of December to February.

6. Method according to claims 5, characterized in that the wild seeds are sown in a greenhouse for germination to take place, where the climatic conditions and the large temperature differences and/or additional local factors of the original source area of the wild plant which affect plant growth are reproduced by mechanical and/or climate technological and/or light-exposure conditions.

7. Method for the production of commercial seeds for the covering with vegetation of surfaces, embankments, slopes and/or construction works involving earthwork or water engineering, water-power plants, cable-car installations and ski sporting facilities whereby a commercial seed produced under a method according to one of the claims 1 to 6 is applied to the areas to be covered with vegetation by mechanical and/or pneumatic and/or hydraulic means accompanied by auxiliary agents such as fertilisers, soil-improvement agents and materials to ensure adhesion.

## Revendications

1. Procédé de production de semences commerciales, destinées pour couvrir avec la végétation des surfaces, des talus, des pentes et/ou des ouvrages de génie civil et hydrologique, autour des centrales électriques à bassin d'accumulation, de téléphériques et d'installations de remontée mécanique, caractérisé en ce que les semences de plantes croissant à l'état sauvage et constituant la population naturelle d'un écotype de l'espèce végétale Festuca rubra, peuvent être récoltées dans des étages alpins et subalpins situées à pue près à la même altitude que les surfaces pour couvrir avec la végétation, ce procédé permet d'abord une récolte telle que les semences puissent composer un échantillonage représentatif de la population d'espèces de plantes sauvages croissant sur les lieux même du ramassage, les semences sauvages sont ensuite amenées à germer dans des zones situées à une altitude inférieure à celle de l'emplacement natif et sous des conditions climatiques simulées de la manière la plus fidèle possible et telles qu'elles règnent sur l'emplacement d'origine, les plantules sont alors repliquées dans des réservoirs de dimensions plus importantes et sont plantées par la suite sur des parcelles de reproduction aménagées dans des régions aisément accessibles et situées en dessous des emplacements d'origine subalpins et alpins, afin qu'elles puissent y produire des semences.

2. Procédé de production de semences commerciales, destinées pour couvrir avec la végétation des surfaces, des talus, des pentes et/ou des ouvrages de génie civil et hydrologique, autour des centrales électriques à bassin d'accumulation, de téléphériques et d'installations de remontée mécanique, caractérisé en ce que les semences de plantes croissant à l'état sauvage et constituant la population naturelle d'un écotype de l'espèce végétale Festuca rubra, peuvent être récoltées dans des étages alpins et subalpins situées à une autre altitude que les surfaces pour couvrir avec la végétation, ce procédé permet d'abord une récolte telle que les semences puissent composer un échantillonage représentatif de la population d'espèces de plantes sauvages croissant sur les lieux même du ramassage, les semences sauvages sont ensuite amenées à germer dans des zones situées à une alititude inférieure à celle de l'emplacement natif et sous des conditions climatiques simulées de la manière la plus fidèle possible et telles qu'elles règnent sur l'emplacement d'origine, les plantules sont alors repliquées dans des réservoirs de dimensions plus importantes et sont plantées par la suite sur des parcelles de reproduction aménagées dans des régions aisément accessibles et situées en dessous des emplacements d'origine subalpins et alpins, afin qu'elles puissent y produire des semences.

3. Procédé selon la revendication 1 ou 2, caracterisé en ce que les semences de plantes à croissance sauvage provenant d'au moins deux emplacements d'origine différents, sont éleves sur des aires de reproduction séparées pendant au moins un cycle de reproduction, ces semences, formées de cette manière sur deux emplacements différents, sont ensuites mélangées et semées sur le même champ de reproduction, les semences, produites sur cette surface combinées de reproduction, sont utilisées alors pour couvrir avec la végétation.

4. Procédé selon revendication 1 ou 2, cararcterisé en ce que les semences des plantes à croissance sauvage provenant d'au moins deux emplacements d'origine différents, sont élevées mélangées pendant au moins deux cycles de reproduction grainière sur le même terrain de reproduction, les semences obtenues ainsi par hybridation entre les différentes populations d'écotypes peuvent être employées pour couvrir avec la végétation.

5. Procédé selon une des revendications 1 à 4, caracterisé en ce que les phases essentielles de la germination sont installées dans les mois de septembre à avril, de préférence de décembre à février.

6. Procédé selon la revendication 5 caracterisé en de que les semences sauvages sont semées et amenées à germination en serres, dans lesquelles les conditions climatiques et les grandes différences de température et ou d'autres facteurs typiques de l'emplacement d'origine, propres à influencer la croissance de la plante, sont simulés au moyen d'auxiliaires mécaniques et/ou climatechniques et/ou phototechniques.

7. Procédé de production de semences commerciales destinées pour couvrir avec la végétation des surfaces, des talus, des pentes et/ou des ouvrages de génie civil et hydrologique, aoutr de centrales électrique à bassin d'accumulation, de téléphériques et d'installations de remontées mécaniques au moyen du procédé selon une des revendications 1 à 6 et selon lequelle les semences commerciales sont répandues sur la surface à couvrir avec la végétation et élevées au moyen d'auxiliaires, tels qu'engrais, matériaux d'optimisation des sols et d'adhérence, à l'aide de procédés mécaniques et/ou pneumatiques et/ou hydrauliques.
